# EUROPEAN PATENT SPECIFICATION

(11) **EP 0 376 186 B1**
(45) Date of publication and mention of the grant of the patent: **10.05.1995**
(21) Application number: 89123740.6
(22) Date of filing: 22.12.1989
(51) Int. Cl.: G06F 15/16

(54) **Method of controlling arithmetic pipeline configuration in multiprocessor system**
Verfahren zur Steuerung einer arithmetischen Pipelinekonfiguration in einem Multiprozessorsystem
Méthode pour la commande d'une configuration pipeline arithmétique dans un système multiprocesseur

(30) Priority: 27.12.1988 JP 330097/88
(43) Date of publication of application: 04.07.1990
(73) Proprietor: NEC CORPORATION, Tokyo (JP)
(72) Inventor: Iwata, Jun, Minato-ku Tokyo (JP)
(74) Representative: VOSSIUS & PARTNER

(56) References cited:
- US-A- 4 748 585
- PATENT ABSTRACTS OF JAPAN vol. 7, no. 282 (P-243)(1427) 16 December 1983 & JP-A-58 159 147
- PATENT ABSTRACTS OF JAPAN vol. 7, no. 6 (P-167)(1151) 11 January 1983 & JP-A-57 164 334
- PATENT ABSTRACTS OF JAPAN vol. 9, no. 40 (P-336)(1763) 20 February 1985 & JP-A-59 180 732

## Description

The present invention relates to a method of controlling an arithmetic pipeline configuration in a multiprocessor system.

In a high-speed arithmetic processor wherein a plurality of arithmetic pipelines are simultaneously operated to perform a large-scale operation at high speed, factors for determining a model type include the number of arithmetic pipelines in addition to the number of arithmetic processors, a cache memory capacity, an address translation buffer capacity, and a main memory capacity.

A practical model type is determined as a combination of the above factors. A few model types including a full model type as a maximum configuration are often proposed. In a system development process, all the model types are not always designed, but only a full model type which can be degraded is designed. Sub model types which are low-end models of the full model type are generally realized by degrading the full model type. In a system of this type, therefore, arithmetic pipelines have been controlled to be appropriately configured. The arithmetic pipeline configuration naturally influences arithmetic performance of the arithmetic processor. In particular, in a multiprocessor system, identical arithmetic pipeline configurations are often designed in all arithmetic processors so as to eliminate differences in performance between the arithmetic processors. According to a conventional technique for realizing this, a common set of arithmetic pipeline configuration information is prepared for the arithmetic processors. Each processor refers to the common set of arithmetic pipeline configuration information and controls its own arithmetic pipeline.

In a multiprocessor system of this type, a given arithmetic processor is logically disconnected from a system under operation, and the arithmetic pipelines of the disconnected arithmetic processor are often diagnosed. In diagnosis of the arithmetic pipelines, it is desirable to diagnose the pipelines by changing their configuration. In a method of controlling an arithmetic pipeline configuration in the conventional multiprocessor system, all the arithmetic processors refer to the common set of arithmetic pipeline configuration information to control their own arithmetic pipeline configurations. For this reason, the arithmetic pipeline configuration of the logically disconnected arithmetic processor is influenced by the arithmetic pipeline configuration in the system under operation and cannot be arbitrarily set. Therefore, satisfactory diagnosis cannot be performed.

### Summary of the Invention

It is, therefore, an object of the present invention to arbitrarily set an arithmetic pipeline configuration of a given arithmetic processor independently of other arithmetic processors in arithmetic pipeline diagnosis performed by logically disconnecting the given arithmetic processor.

In order to achieve the above object of the present invention, there is provided a method of controlling an arithmetic pipeline configuration in a multiprocessor system as set out in claim 1.

In a method of controlling an arithmetic pipeline configuration in a multiprocessor system according to the present invention, the common configuration information storage means stores the arithmetic pipeline configuration information common to all arithmetic processors, and individual configuration information storage means respectively arranged in correspondence with all arithmetic processors store arithmetic pipeline configuration information of the corresponding arithmetic processors. A given arithmetic processor controls its own arithmetic pipeline configuration in accordance with the arithmetic pipeline configuration information stored in the common configuration information storage means when the given arithmetic processor is logically connected to the system under operation. The given arithmetic processor controls its own arithmetic pipeline configuration in accordance with the arithmetic pipeline configuration information stored in its own individual configuration information storage means when the given processor is logically disconnected from the system under operation.

### Brief Description of the Drawings

Fig. 1 is a block diagram showing an arrangement of a multiprocessor system according to an embodiment of the present invention;
Fig. 2 is a block diagram showing an arrangement of one of arithmetic processors 50 to 53; and
Fig. 3 is a view showing a relationship between signal lines in Fig. 1 and signal lines in Fig. 2.

### Description of the Preferred Embodiment

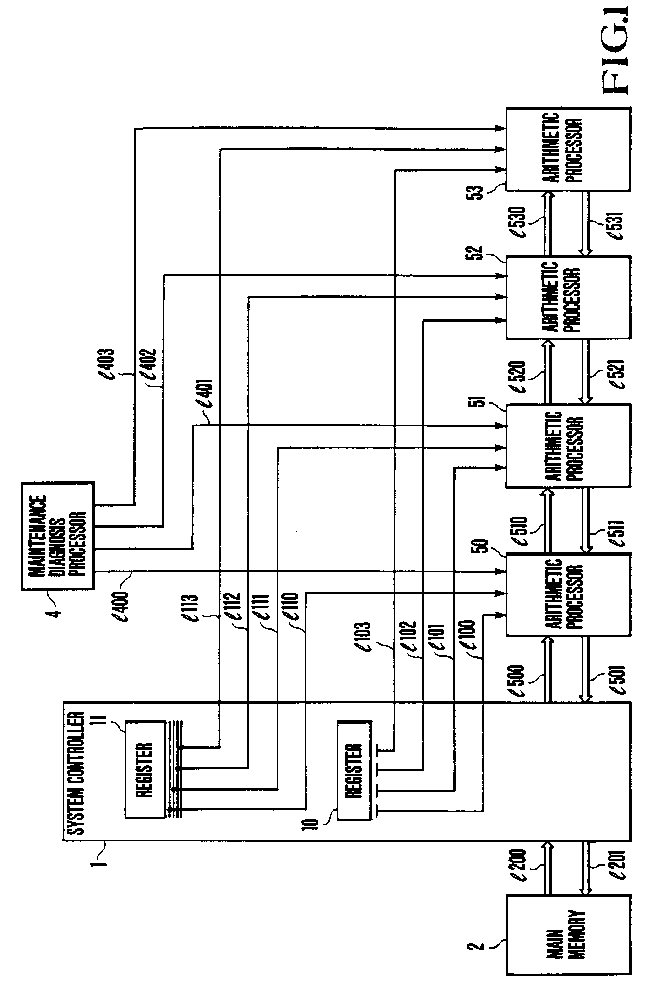

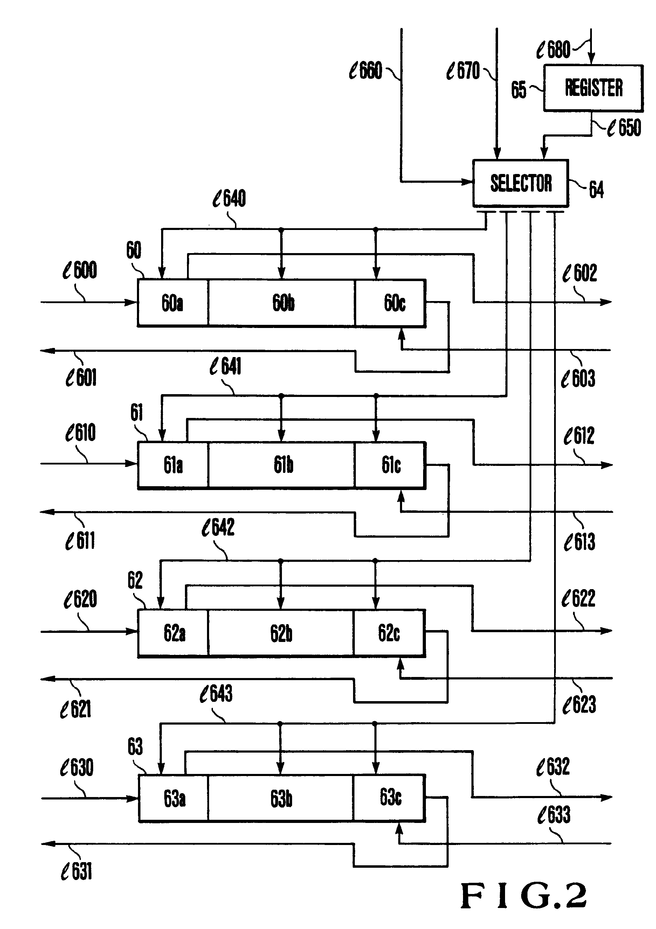

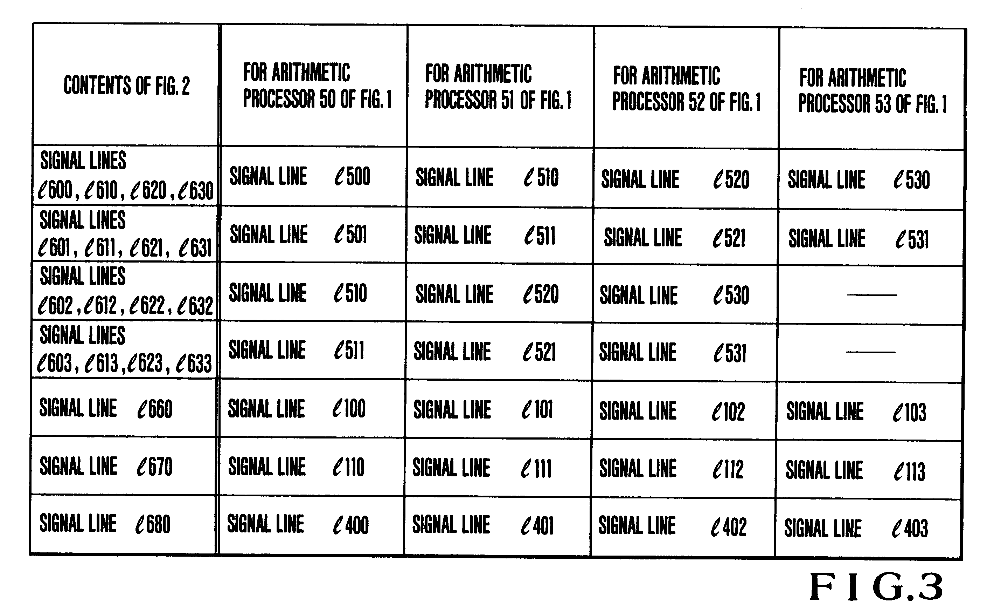

A preferred embodiment of the present invention will be described in detail with reference to Figs. 1 to 3.

Fig. 1 shows a multiprocessor system which employs a method of controlling an arithmetic pipeline configuration according to the present invention.

Referring to Fig. 1, a system controller 1 controls data transfer between a main memory 2 and arithmetic processors 50 to 53 and controls a system configuration. The system controller 1 is connected to the main memory 2 and the arithmetic processor 50. The arithmetic processor 50 is connected in series with the arithmetic processors 51, 52, and 53. Signal lines ℓ200, ℓ201, ℓ500, ℓ501, ℓ510, ℓ511, ℓ520, ℓ521, ℓ530, and ℓ531 are data paths between the main memory 2, the system controller 1, and the arithmetic processors 50 to 53.

The arithmetic processors 50 to 53 are identical processors. As shown in Fig. 2, each arithmetic processor has four arithmetic pipelines.

A register 10 is arranged in the system controller 1 and comprises a 4-bit register whose bits respectively correspond to the arithmetic processors 50 to 53. The register 10 stores configuration control information of the arithmetic processors 50 to 53. When logic "1" is set in the register 10, the corresponding processor is logically connected to the system. However, when logic "0" is set in the register 10, the corresponding arithmetic processor is logically disconnected from the system. Bit outputs from the register 10 are supplied to the corresponding arithmetic processors 50 to 53 through the signal lines ℓ100 to ℓ103, respectively.

A register 11 is arranged in the system controller 1 and comprises a 4-bit register whose bits respectively correspond to four arithmetic pipelines. The register 11 stores arithmetic pipeline configuration control information. Four bit outputs from the register 11 are sent to the arithmetic processors 50 to 53 through the signal lines ℓ110 to ℓ113, respectively.

A maintenance diagnosis processor 4 controls maintenance diagnosis of the system controller 1, the main memory 2, and the arithmetic processors 50 to 53. The maintenance diagnosis processor 4 is also connected to the system controller 1 and the main memory 2. For illustrative convenience, only the diagnosis data setup paths connected to the arithmetic processors 50 to 53 respectively represented by the signal lines ℓ400 to ℓ403 are illustrated.

Fig. 2 shows an arithmetic processor configuration of any one of the arithmetic processors 50 to 53 shown in Fig. 1. The relationship between the signal lines in Fig. 1 and the signal lines in Fig. 2 is shown in Fig. 3.

Referring to Fig. 2, arithmetic pipelines 60 to 63 are identical pipelines and each pipeline has a plurality of processing stages. These stages are sequentially executed every machine cycle. The pipeline comprises three processing units represented by a, b, and c in Fig. 2. Since the operations of the arithmetic pipelines 60 to 63 are the same, the operation of the arithmetic pipeline 60 will be exemplified. A portion 60a of the arithmetic pipeline 60 is a data input processing unit including a data input processing stage. When operand data input through a signal line ℓ600 represents its own operand data, the portion 60a performs data alignment, generates arithmetic data and sends it to a portion 60b. When the operand data is not its own data, the portion 60a directly outputs the operand data to a signal line ℓ602. The portion 60b is an arithmetic processing unit including an arithmetic processing stage. When the arithmetic data is output from the portion 60a, the portion 60b executes the corresponding arithmetic operation, and supplies the operation result to a portion 60c. The portion 60c is a data output processing unit including a stage of outputting the operation result data. The portion 60c receives the operation result data sent from the portion 60b and the operation result data from other arithmetic processors supplied through a signal line ℓ603, and outputs them onto a signal line ℓ601.

A selector 64 receives the data (the content of the register 11 in Fig. 1) input from a signal line ℓ670 and the content of a register 65 input from a signal line ℓ650 and selects and outputs one of the input data. More specifically, when the configuration information bit of its own arithmetic processor (i.e., an output from the register 10 in Fig. 1) input from a signal line ℓ660 is set at logic "1", the content from the signal line ℓ670 is selected. However, When the configuration information bit is set at logic "0", the content from the signal line ℓ650 is selected. Four bit outputs from the selector 64 correspond to the arithmetic pipelines 60 to 63 and supplied to the arithmetic pipelines 60 to 63 through signal lines ℓ640 to ℓ643, respectively.

An arithmetic pipeline corresponding to a bit of logic "0" of the output from the selector 64 is set in a degraded state, and the operations of the processing units described above are invalidated.

The register 65 comprises a 4-bit register for storing data (i.e., diagnosis data representing individual arithmetic pipeline configuration information from the maintenance diagnosis processor 4 in Fig. 1) set through a signal line ℓ680.

This embodiment comprises the system configuration described above. Arithmetic pipeline configurations of the arithmetic processors 50 to 53 are controlled as follows. Since all the selectors 64 of arithmetic processors set to be logically connected to the system by the register 10 select the inputs through the signal lines ℓ670, they control their own arithmetic pipeline configurations in accordance with the common arithmetic pipeline configuration information set in the register 11. By using the single operation pipeline configuration information, the arithmetic pipeline configurations of the arithmetic processors logically connected to the system can be set identical with each other. Since the selectors 64 of arithmetic processors logically disconnected from the system by the register 10 select inputs from the signal lines ℓ650, they control their own arithmetic pipeline configurations in accordance with their own arithmetic pipeline configuration information set in the corresponding registers 65. Therefore, when any arithmetic processor is subjected to arithmetic pipeline diagnosis upon its logical disconnection from the system under operation, its arithmetic pipeline configuration can be arbitrarily set from the maintenance diagnosis processor 4.

In a method of controlling an arithmetic pipeline configuration in a multiprocessor system according to the present invention, a given arithmetic processor controls its own arithmetic pipeline configuration in accordance with the arithmetic pipeline configuration information stored in the common configuration information storage means when the given arithmetic processor is logically connected to the system under operation. The given arithmetic processor controls its own arithmetic pipeline configuration in accordance with the arithmetic pipeline configuration information stored in its own individual configuration information storage means independently of other arithmetic processors when the given processor is logically disconnected from the system under operation. Therefore, when arithmetic pipeline diagnosis performed upon logical disconnection of a given arithmetic processor from the system under operation, the arithmetic pipeline configuration of the given arithmetic processor can be freely set independently of those of other arithmetic processors, and arithmetic pipeline diagnosis can be satisfactorily performed.

## Claims

1. A method of controlling an arithmetic pipeline configuration in a multiprocessor system comprising a plurality of arithmetic processors (50,51,52,53) each having a plurality of arithmetic pipelines said multiprocessor further comprising a main memory (2), and a system controller (1) for controlling data transfer between the plurality of arithmetic processors and the main memory and a system configuration, the system controller being provided with common configuration information storage means (11) for storing arithmetic pipeline configuration information common to all the arithmetic processors, and each arithmetic processor having individual configuration information storage means (65) for storing arithmetic pipeline configuration information of the corresponding arithmetic processor, wherein
a given arithmetic processor controls its own arithmetic pipeline configuration in accordance with the arithmetic pipeline configuration information stored in the common configuration information storage means (11) when the given arithmetic processor is logically connected to the system under operation, and the given arithmetic processor controls its own arithmetic pipeline configuration in accordance with the arithmetic pipeline configuration information stored in its own individual configuration information storage means (65) when the given processor is logically disconnected from the system under operation.

## Patentansprüche

1. Verfahren zur Steuerung einer Arithmetikpipeline-Konfiguration in einem Multiprozessorsystem mit mehreren Arithmetikprozessoren (50, 51, 52, 53), deren jeder mehrere Arithmetikpipelines aufweist, wobei das Multiprozessorsystem ferner einen Arbeitsspeicher (2) und eine Systemsteuereinheit (1) zum Steuern der Datenübertragung zwischen den mehreren Arithmetikprozessoren und dem Arbeitsspeicher sowie eine Systemkonfiguration aufweist, wobei die Systemsteuereinheit mit einer gemeinsamen Konfigurationsinformations-Speichereinrichtung (11) zum Abspeichern einer allen Arithmetikprozessoren gemeinsamen Arithmetikpipeline-Konfigurationsinformation ausgestattet ist, und wobei jeder Arithmetikprozessor eine individuelle Konfigurationsinformations-Speichereinrichtung (65) zum Abspeichern einer Arithmetikpipeline-Konfigurationsinformation des entsprechenden Arithmetikprozessors aufweist, wobei
ein gegebener Arithmetikprozessor seine eigene Arithmetikpipeline-Konfiguration entsprechend der in der gemeinsamen Konfigurationsinformations-Speichereinrichtung (11) gespeicherten Arithmetikpipeline-Konfigurationsinformation steuert, wenn der gegebene Arithmetikprozessor mit dem in Betrieb befindlichen System logisch verbunden ist, und wobei der gegebene Arithmetikprozessor seine eigene Arithmetikpipeline-Konfiguration entsprechend der in seiner eigenen, individuellen Konfigurationsinformations-Speichereinrichtung (65) gespeicherten Arithmetikpipeline-Konfigurationsinformation steuert, wenn der gegebene Prozessor von dem in Betrieb befindlichen System logisch abgetrennt ist.

## Revendications

1. Procédé pour la commande d'une configuration pipeline arithmétique dans un système multiprocesseur, comprenant une pluralité de processeurs arithmétiques (50, 51, 52, 53) ayant chacun une pluralité de pipelines arithmétiques, ledit multiprocesseur comprenant en outre une mémoire centrale (2) et un régisseur de système (1) pour commander le transfert de données entre la pluralité de processeurs arithmétiques et la mémoire centrale et une configuration du système, le régisseur de système étant pourvu de moyens de mémorisation d'informations de configuration commune (11) pour conserver une information de configuration pipeline arithmétique commune à tous les processeurs arithmétiques, et chaque processeur arithmétique ayant des moyens de mémorisation d'informations de configuration individuelle (65) pour conserver une information de configuration pipeline arithmétique du processeur arithmétique correspondant, dans lequel un processeur arithmétique donné commande sa propre configuration pipeline arithmétique en fonction de l'information de configuration pipeline arithmétique conservée dans les moyens de mémorisation d'informations de configuration commune (11) lorsque le processeur arithmétique donné est logiquement relié au système en fonctionnement, et le processeur arithmétique donné commande sa propre configuration pipeline arithmétique en fonction de l'information de configuration pipeline arithmétique conservée dans ses propres moyens de mémorisation d'informations de configuration individuelle (65) lorsque le processeur donné est logiquement séparé du système en fonctionnement.
